# EUROPÄISCHE PATENTANMELDUNG

(11) **EP 4 424 621 A1**
(43) Veröffentlichungstag der Anmeldung: **04.09.2024**
(21) Anmeldenummer: 24160070.9
(22) Anmeldetag: 27.02.2024
(51) Int. Cl.: B65G 69/28, G01S 17/894, G01S 17/931, G01S 17/89

(54) **VORRICHTUNG ZUM POSITIONIEREN EINES FAHRZEUGES AN EINEM BE- UND/ODER ENTLADEPUNKT**

(30) Priorität: 28.02.2023 DE 102023104951
(71) Anmelder: Deutsche Post AG, 53113 Bonn (DE)
(72) Erfinder: Kraus, Sascha, 63179 Obertshausen (DE)
(74) Vertreter: Michalski Hüttermann & Partner Patentanwälte mbB

(57) **Zusammenfassung**

Die Erfindung betrifft eine Vorrichtung zum Positionieren eines Fahrzeuges (1), insbesondere eines Lastkraftwagens, an einem Be- und/oder Entladepunkt (2), aufweisend
wenigstens einen Sensor (3) zum Erfassen einer Position des Fahrzeuges (1),
eine Auswerteeinheit (4) zum Bestimmen eines Abstandes (d) zwischen dem Fahrzeug (1) und dem Be- und/oder Entladepunkt (2) abhängig von der erfassten Position des Fahrzeuges (1), und
eine Anzeigeeinheit (5) zum Visualisieren einer Rückmeldung an einen Fahrer des Fahrzeuges (1) abhängig von dem Abstand (d) zwischen dem Fahrzeug (1) und dem Be- und/oder Entladepunkt (2),
wobei der wenigstens eine Sensor (3) und die Anzeigeeinheit (5) zur Montage an dem Be- und/oder Entladepunkt (2) ausgestaltet sind.

Auf diese Weise wird eine Vorrichtung zum Positionieren eines Fahrzeuges (1) bereitgestellt, mit der ein beliebiges Fahrzeug (1) unabhängig vom Fahrzeugtyp oder der Fahrzeugausstattung zuverlässig und präzise an einem vorbestimmten Punkt positioniert werden kann.

## Beschreibung

Die Erfindung betrifft eine Vorrichtung zum Positionieren eines Fahrzeuges, insbesondere eines Lastkraftwagens, an einem Be- und/oder Entladepunkt.

Beim Be- und/oder Entladen eines Fahrzeuges, insbesondere eines Lastkraftwagens, ist es erforderlich, dass das Fahrzeug rückwärts an einen Be- und/oder Entladepunkt herangefahren wird. Diese Situation ist insbesondere beim Verladen von Waren im gewerblichen Bereich täglich eine Herausforderung. Die Lastkraftwagen befördern diverse Aufbauten, die mit der Ware beladen werden können. Weder die Lastkraftwagen noch die Aufbauten oder Wechselbrücken weisen die aus der Automobilbranche bekannten Abstandswarner auf. Auf Grund des stetigen Wechsels der Aufbauten oder Wechselbrücken wäre eine derartige Technik auch ohnehin nicht realisierbar, da jede Wechselbrücke eine entsprechende eigene Sensorik aufweisen müsste.

Eine korrekte Positionierung des Lastkraftwagens ist von besonders hoher Wichtigkeit, da ein zu großer Abstand bzw. Lücke zwischen dem Lastkraftwagen und dem Be- und/oder Endladepunkt, insbesondere der Laderampe, ein enormes Verletzungsrisiko für das Verladepersonal beim Be- und/oder Entladen darstellt. Arbeitsunfälle und Ausfälle des Personals sind die Folge. Ein zu nahes bzw. dichtes Heranfahren des Lastkraftwagens an den Be- und/oder Entladepunkt führt zu Kollisionen. Dadurch entstehen regelmäßig nicht unerhebliche Schäden sowohl an den Be- und/oder Entladepunkten als auch an den Lastkraftwagen bzw. Wechselbrücken oder anderweitigen Aufbauten. Ein manuelles Einweisen durch weiteres Personal kann zu Unfällen und einem erhöhten Verletzungsrisiko führen, da der benötigte Platz zwischen dem Lastkraftwagen und dem Be- und/oder Entladepunkt innerhalb des Sichtbereichs des Fahrers sehr eingeschränkt ist.

Die aus dem Stand der Technik bekannten Vorrichtungen oder Verfahren erlauben es bisher noch nicht, eine Möglichkeit bereitzustellen, ein Fahrzeug ohne eigene entsprechende Sensorik zuverlässig und präzise an einen Be- und/oder Entladepunkt heranzufahren.

Davon ausgehend ist es die Aufgabe der Erfindung, eine Vorrichtung zum Positionieren eines Fahrzeuges bereitzustellen, mit der ein beliebiges Fahrzeug unabhängig vom Fahrzeugtyp oder der Fahrzeugausstattung zuverlässig und präzise an einem vorbestimmten Punkt positioniert werden kann.

Diese Aufgabe wird durch den Gegenstand des Patentanspruchs 1 gelöst. Bevorzugte Weiterbildungen finden sich in den Unteransprüchen.

Erfindungsgemäß ist somit eine Vorrichtung zum Positionieren eines Fahrzeuges, insbesondere eines Lastkraftwagens, an einem Be- und/oder Entladepunkt vorgesehen, aufweisend wenigstens einen Sensor zum Erfassen einer Position des Fahrzeuges, eine Auswerteeinheit zum Bestimmen eines Abstandes zwischen dem Fahrzeug und dem Be- und/oder Entladepunkt abhängig von der erfassten Position des Fahrzeuges, und eine Anzeigeeinheit zum Visualisieren einer Rückmeldung an einen Fahrer des Fahrzeuges abhängig von dem Abstand zwischen dem Fahrzeug und dem Be- und/oder Entladepunkt, wobei der wenigstens eine Sensor und die Anzeigeeinheit zur Montage an dem Be- und/oder Entladepunkt ausgestaltet sind.

Es ist somit ein maßgeblicher Punkt der Erfindung, dass die Vorrichtung am Ort der Positionierung angeordnet ist und dem Fahrer eines Fahrzeuges unabhängig vom Fahrzeug eine Rückmeldung hinsichtlich des Abstandes zwischen dem Fahrzeug und dem Be- und/oder Entladepunkt während des Positionierungsvorgangs mitgeteilt werden kann.

Ist vorliegend die Rede davon, dass der wenigstens eine Sensor und die Anzeigeeinheit zur Montage an dem Be- und/oder Entladepunkt ausgestaltet sind, ist damit gemeint, dass der wenigstens eine Sensor und die Anzeigeeinheit grundsätzlich für die Montage an einer Wand und/oder an einer Decke ausgestaltet sind und vorgesehen ist, dass der wenigstens eine Sensor und die Anzeigeeinheit im betriebsbereiten Zustand an dem Be- und/oder Entladepunkt angeordnet sind.

Als "betriebsbereiter Zustand" wird vorliegend der Zustand verstanden, in dem die Vorrichtung montiert und funktionsbereit ist. Das bedeutet, dass der wenigstens eine Sensor und die Anzeigeeinheit dazu ausgelegt sind, an dem Be- und/oder Entladepunkt montiert zu werden. Die Auswerteeinheit kann beliebig positioniert werden. Ist die Montage abgeschlossen, befindet sich die Vorrichtung im betriebsbereiten Zustand und kann verwendet werden.

Der Be- und/oder Entladepunkt kann dabei ein beliebig gewählter Referenzpunkt sein. Der Be- und/oder Entladepunkt kann insbesondere an einer Laderampe, an einer Parklücke, in einer Garage oder in einer Halle vorgesehen sein. Mit Be- und/oder Entladen ist insbesondere jegliche Interaktion mit dem Fahrzeug gemeint, für die das Fahrzeug an einer vordefinierten Stelle bzw. Position geparkt sein muss. Vorzugsweise ist der Be- und/oder Entladepunkt der in horizontaler Richtung mittlere Punkt einer Laderampe oder der in horizontaler Richtung mittlere Punkt einer Parklücke.

Gemäß einer bevorzugten Weiterbildung der Erfindung umfasst der wenigstens eine Sensor einen Lidar-Sensor. Lidar ist eine dem Radar verwandte Methode zur optischen Abstands- und Geschwindigkeitsmessung sowie zur Fernmessung atmosphärischer Parameter. Es ist eine Form des dreidimensionalen Laserscanning. Statt der Radiowellen wie beim Radar werden Laserstrahlen verwendet. Lidar-Systeme senden Laserimpulse aus und detektieren das zurückgestreute Licht. Aus der Lichtlaufzeit der Signale wird die Entfernung zum Ort der Streuung berechnet. Mit Hilfe des Lidar-Sensors kann insbesondere ein Bereich von 0° bis wenigstens 270° abgescannt werden. Die Vermessung zwischen Fahrzeug und Be- und/oder Entladepunkt erfolgt demnach unabhängig von der Kontur des Fahrzeuges. Der Lidar-Sensor detektiert die äußere Kontur und kann somit einen Abstand zwischen Fahrzeug und Be- und/oder Entladepunkt ermitteln.

Vorzugsweise ist vorgesehen, dass die Vorrichtung zum Erfassen komplexerer Konturen mehrere Sensoren, insbesondere mehrere Lidar-Sensoren, aufweist. Mehrere Lidar-Sensoren erlauben nicht nur das Erfassen einer zweidimensionalen Kontur, sondern das Erfassen eines dreidimensionalen Abbildes des Fahrzeuges. Auf diese Weise können nicht nur Fahrzeuge mit symmetrischen Außenkonturen, wie beispielsweise die rechteckigen Aufbauten der Lastkraftwagen, sondern auch Fahrzeuge unterschiedlicher Formen erfasst werden. Die Vorrichtung eignet sich somit für eine Vielzahl diverser Fahrzeuge, die an einen Be- und/oder Entladepunkt herangefahren werden müssen.

Gemäß einer bevorzugten Weiterbildung der Erfindung weist die Vorrichtung eine Schnittstelle auf, die zur Kommunikation mit externen Systemen eingerichtet ist. Ein externes System kann dabei beispielsweise ein Rolltor sein. Ist das Fahrzeug korrekt positioniert, das bedeutet, dass der Abstand zwischen Fahrzeug und Be- und/oder Entladepunkt einem vorbestimmten Sollwert entspricht, können davon abhängig weitere Systeme gesteuert werden. Hinsichtlich des zuvor genannten Rolltores kann das Rolltor an einer Laderampe beispielsweise dann geöffnet werden, wenn das Fahrzeug die Sollposition erreicht hat. Im Umkehrschluss ist es somit möglich, das Rolltor während des Positionierungsvorgangs geschlossen zu halten bis die Sollposition erreicht ist, um Unfälle und Verletzungen zu vermeiden. Weitere externe Systeme können beispielsweise autonome Beförderungsmittel sein, die abhängig von der Fahrzeugposition zu dem jeweiligen Tor gesteuert werden können.

Gemäß einer bevorzugten Weiterbildung der Erfindung weist der Be- und/oder Entladepunkt eine Laderampe und ein an die Laderampe angrenzendes Tor auf. Bevorzugt ist der wenigstens eine Sensor im betriebsbereiten Zustand an einem oberen Teil des Tores angeordnet. Die Vorrichtung und das Zusammenspiel der Komponenten sind demnach vorzugsweise dazu ausgelegt, dass der Sensor an einer zentralen Stelle oberhalb des Tores angeordnet wird. Die Positionierung des wenigstens einen Sensors an einer oberen Kante des Tores ermöglicht das Erfassen des Fahrzeuges von oben nach unten in Richtung des Bodens gerichtet. Ferner kann insbesondere, wie bereits erläutert, mit Hilfe des Lidar-Sensors ein Bereich von 0° bis wenigstens 270° abgescannt werden. Auf Grund der Positionierung am oberen Bereich des Tores sind die übrigen höchsten 90° um den Sensor angeordnet und nach oben gerichtet, sodass im Bereich zwischen Fahrzeug, Fahrbahn und Be- und/oder Entladepunkt keine nicht mittels des wenigstens einen Sensors erfassbaren Bereiche entstehen und die Erfassung des Fahrzeugs zuverlässig ohne unsichtbare Bereiche erfolgen kann.

Gemäß einer bevorzugten Weiterbildung der Erfindung ist der wenigstens eine Sensor auf einer Höhe von wenigstens 3,5 m, bevorzugt wenigstens 3,8 m, besonders bevorzugt wenigstens 4m angeordnet. Wie bereits erläutert, ermöglicht die Positionierung des wenigstens einen Sensors an einer oberen Kante des Tores das Erfassen des Fahrzeuges von oben nach unten in Richtung des Bodens gerichtet. Ist der wenigstens eine Sensor auf einer Höhe von wenigstens 3,5 m, bevorzugt wenigstens 3,8 m, besonders bevorzugt wenigstens 4 m angeordnet, wird das Erfassen des Bodens bzw. der Fahrbahn in einem Bereich insbesondere bis zu 25 m vor dem Be- und/oder Entladepunkt ermöglicht. Eine herkömmliche Wechselbrücke weist eine Länge von ca. 7 m bis 8 m auf. Zuzüglich der Länge des Lastkraftwagens bzw. des Fahrerhauses sind Gesamtlängen bis zu 10 m realistisch. Auf Grund der erfassbaren Strecke von bis zu 25 m vor dem Zielpunkt, also dem Be- und/oder Entladepunkt, kann der Fahrer frühzeitig angeleitet werden und der Positioniervorgang frühzeitig erfasst werden, sodass eine zuverlässige Abstandsmessung gewährleistet werden kann.

Erfindungsgemäß ist weiterhin ein Verfahren zum Positionieren eines Fahrzeuges an einem Be- und/oder Entladepunkt mittels einer Vorrichtung nach einem der vorherigen Ansprüche vorgesehen, mit folgenden Verfahrensschritten:
S1) Erfassen einer Position des Fahrzeuges mittels des wenigstens einen Sensors,
S2) Bestimmen eines Abstandes zwischen dem Fahrzeug und dem Be- und/oder Entladepunkt abhängig von der Position des Fahrzeuges,
S3) Kategorisieren der Position des Fahrzeuges und Ausgeben einer Rückmeldung an den Fahrer mittels der Anzeigeeinheit,
S4) Iteratives Wiederholen der Schritte S1) bis S3) bis der Positionierungsvorgang abgeschlossen ist.

Es ist somit ein maßgeblicher Punkt der Erfindung, dass der Positionierungsvorgang des Fahrzeuges an dem Be- und/oder Entladepunkt laufend vermessen wird. Die Position des Fahrzeuges wird erfasst und der Abstand zum Be- und/oder Entladepunkt bestimmt. Abhängig von dem Abstand wird dem Fahrer eine Rückmeldung über den Abstand und den aktuellen Zustand während des Positionierungsvorgangs gegeben. Der Positionierungsvorgang ist abgeschlossen, wenn ein vorbestimmter Abstand zwischen Fahrzeug und Be- und/oder Entladepunkt insbesondere zuzüglich eines Toleranzbereichs erreicht ist bzw. nicht überschritten ist.

Gemäß einer bevorzugten Weiterbildung der Erfindung erfolgt das Kategorisieren der Position des Fahrzeuges in wenigstens drei Kategorien, die Kategorien umfassend "Vor", "Stopp" und "Zurück". Dabei wird die Position des Fahrzeuges in die Kategorie "Zurück" eingeordnet, wenn der Abstand zwischen Fahrzeug und Be- und/oder Entladepunkt größer als ein Sollwert ist und das Fahrzeug zum Erreichen der Sollposition näher an den Be- und/oder Entladepunkt "zurück" gefahren werden muss. Die Position des Fahrzeuges wird in die Kategorie "Vor" eingeordnet, wenn der Abstand zwischen Fahrzeug und Be- und/oder Entladepunkt kleiner als der Sollwert ist und das Fahrzeug zum Erreichen der Sollposition entfernt und von dem Be- und/oder Entladepunkt "vor" gefahren werden muss. Die Position des Fahrzeuges wird in die Kategorie "Stopp" eingeordnet, wenn der Abstand zwischen Fahrzeug und Be- und/oder Entladepunkt dem Sollwert entspricht und das Fahrzeug die Sollposition erreicht hat und weder vor noch zurückbewegt werden muss. Entsprechend der Kategorie wird an der Anzeigeeinheit eine visuelle Rückmeldung ausgegeben. Die Anzeigeeinheit umfasst vorzugsweise ein Ampelsystem. Insbesondere werden für die Kategorien "Vor" und "Zurück" jeweils ein Pfeil, der in die entsprechende Fahrtrichtung zeigt, und für die Kategorie "Stopp" ein roter Punkt angezeigt.

Gemäß einer bevorzugten Weiterbildung der Erfindung umfasst das Verfahren folgende weitere Verfahrensschritte:
S1a) Einteilen eines virtuellen Abbildes der Fahrbahn vor dem Be- und/oder Entladepunkt in eine Mehrzahl virtueller Felder,
S1b) Erkennen einer Kontur des Fahrzeuges, und
S1c) Bestimmen der Position des Fahrzeuges anhand der Kontur und der virtuellen Felder.

Mit Hilfe des Lidar-Sensors wird die Umgebung rund um den Be- und/oder Entladepunkt inkl. zu dem Be- und/oder Entladepunkt führende Fahrbahn erfasst. Die Fahrbahn wird erkannt und das entsprechende virtuelle Abbild mit einem virtuellen Raster an Feldern überlagert, sodass die real erkannte Fahrbahn bzw. das Abbild in mehrere virtuelle Felder eingeteilt wird. Die Felder dienen zur Abstandsbestimmung. Dadurch, dass der Sensor insbesondere nicht auf der Höhe des Be- und/oder Entladepunktes angeordnet ist und die Abstandsmessung dementsprechend nicht auf einer horizontalen Achse, sondern von schräg oben erfolgt, ist die Abstandsmessung deutlich komplexer. Die Einteilung der Fahrbahn in mehrere virtuelle Felder und die Erkennung der Kontur des Fahrzeuges innerhalb dieser Felder ermöglicht das Bestimmen des Abstandes zwischen dem Fahrzeug und dem Be- und/oder Entladepunkt von einem externen dritten Punkt insbesondere mit verzerrter Blickrichtung von schräg oben.

Gemäß einer bevorzugten Weiterbildung der Erfindung weisen die virtuellen Felder jeweils eine Feldgröße von höchstens 10cm x 10cm, bevorzugt höchstens 5cm x 5cm, besonders bevorzugt höchstens 2cm x 2cm auf. Dabei kann die Feldgeometrie insbesondere quadratisch oder rechteckig sein. Bei einer rechteckigen Geometrie weist eine erste Seite des Feldes maximal die Länge der maximalen Feldgröße auf, während die zweite Seite des Feldes kleiner als die erste Seite des Feldes ist. Auf Grund der Feldgröße kann eine hohe Auflösung und Genauigkeit der Positionierung gewährleistet werden. Das Fahrzeug kann vorzugsweise bis zu 2 cm präzise an den Be- und/oder Entladepunkt herangefahren werden.

Erfindungsgemäß ist weiterhin die Verwendung der zuvor beschriebenen Vorrichtung zum Positionieren eines Lastkraftwagens an einer Laderampe gemäß dem zuvor beschriebenen Verfahren vorgesehen bzw. die Verwendung eines Verfahrens wir zuvor beschriebenen zum Positionieren eines Lastkraftwagens an einer Laderampe. Die Erfindung sieht demnach vor, dass die Vorrichtung zum Positionieren eines Fahrzeuges an einem Be- und/oder Entladepunkt explizit zum Positionieren eines Lastkraftwagens an einer Laderampe verwendet wird. Der Lastkraftwagen wird dabei rückwärts an die Laderampe herangefahren, um den Lastkraftwagen bzw. einen entsprechenden Aufbau über die Laderampe zu be- oder entladen. Die Laderampe umfasst insbesondere ein Tor, an dem der Lastkraftwagen präzise positioniert werden muss.

Nachfolgend wird die Erfindung anhand eines bevorzugten Ausführungsbeispiels unter Bezugnahme auf die Zeichnungen weiter im Detail erläutert.

In den Zeichnungen zeigen
- Fig. 1: schematisch eine Vorrichtung zum Positionieren eines Fahrzeuges gemäß einem bevorzugten Ausführungsbeispiel der Erfindung,
- Fig. 2a, b: schematisch eine Vorrichtung zum Positionieren eines Fahrzeuges gemäß einem bevorzugten Ausführungsbeispiel der Erfindung in einer perspektivischen Ansicht,
- Fig. 2c: schematisch eine Anzeigeeinheit gemäß einem bevorzugten Ausführungsbeispiel der Erfindung in einer perspektivischen Ansicht,
- Fig. 3: schematisch ein virtuelles Abbild eines Fahrzeuges gemäß einem bevorzugten Ausführungsbeispiel der Erfindung in einer Draufsicht,
- Fig. 4: ein Flussdiagramm eines Verfahrens zum Positionieren eines Fahrzeuges gemäß einem bevorzugten Ausführungsbeispiel der Erfindung.

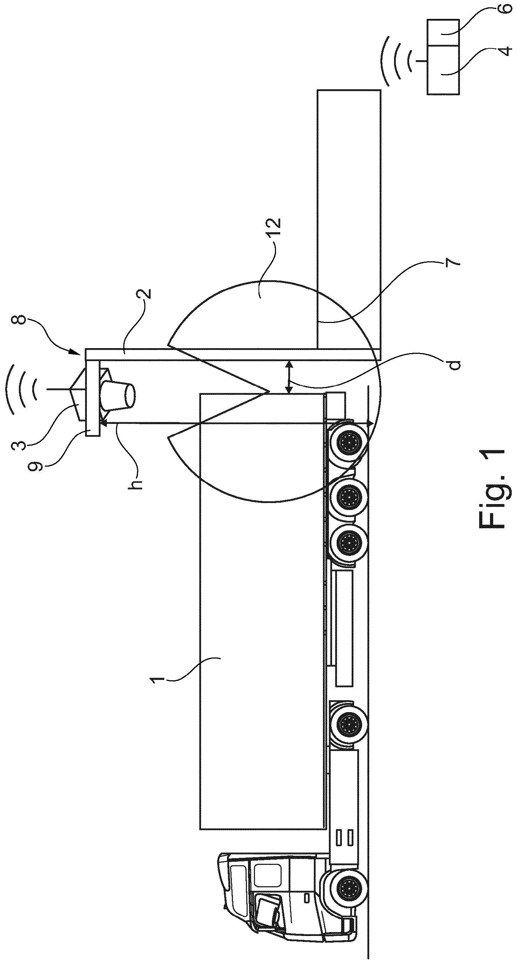

Aus Fig. 1 ist schematisch eine Vorrichtung zum Positionieren eines Fahrzeuges 1 gemäß einem bevorzugten Ausführungsbeispiel der Erfindung ersichtlich. Das Fahrzeug 1, hier am Beispiel eines Lastkraftwagens gezeigt, wird rückwärts an eine Laderampe 7 gefahren. Die Laderampe 7 stellt zusammen mit dem Tor 8 den Be- und/oder Entladepunkt 2 dar, an dem das Fahrzeug 1 positioniert werden soll. An einem oberen Teil 9 des Tores 8 ist ein Sensor 3 angeordnet. Der Sensor 3 erfasst seine Umgebung innerhalb des eingezeichneten Erfassungsbereichs 12 und überträgt die Daten an eine Auswerteeinheit 4. Die Höhe h des Sensors bestimmt die Reichweite des Erfassungsbereichs 12. Der Sensor 3 erfasst die äußere Kontur des Fahrzeuges 1 und bestimmt somit die Position des Fahrzeuges 1. Abhängig von der Position des Fahrzeuges 1 und dem Be- und/oder Entladepunkt 2 wird mittels der Auswerteeinheit 4 ein Abstand d ermittelt. Für den Abstand d ist ein Sollwert hinterlegt. Je nachdem ob der der Abstand d zwischen dem Fahrzeug 1 und dem Be- und/oder Entladepunkt 2 größer, kleiner oder gleich dem Sollwert ist, wird ein entsprechendes Zeichen über die in Fig. 1 nicht dargestellte Anzeigeeinheit 5 an den Fahrer des Fahrzeuges 1 ausgegeben. Über eine Schnittstelle 6 können zudem externe Systeme, wie beispielsweise ein Rolltor, abhängig vom ermittelten Abstand d zwischen dem Fahrzeug 1 und dem Be- und/oder Entladepunkt 2 gesteuert werden. Ist beispielsweise das Fahrzeug 1 korrekt positioniert, das bedeutet, dass der Abstand d dem Sollwert entspricht, kann das Rolltor automatisch geöffnet werden.

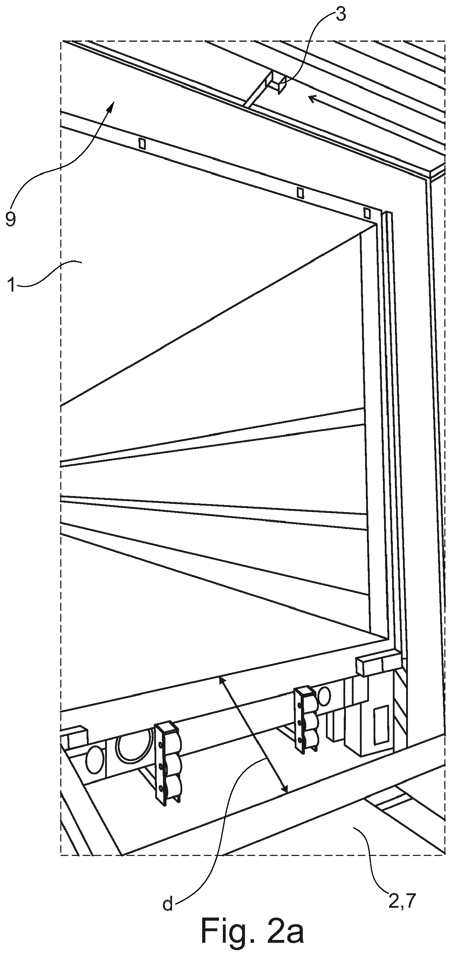

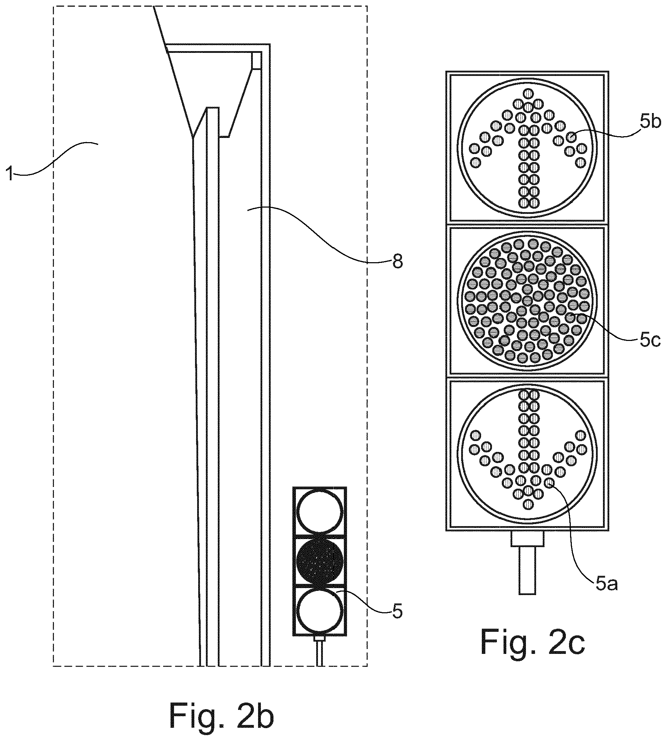

Die Figuren 2a und 2b zeigen schematisch die Vorrichtung zum Positionieren eines Fahrzeuges 1 gemäß einem bevorzugten Ausführungsbeispiel der Erfindung in einer perspektivischen Ansicht. Die Figur 2a zeigt den Blick von der Laderampe 7 in Richtung des Fahrzeuges 1. Die Figur 2b hingegen zeigt den Blick seitlich vom Fahrzeug 1 in Richtung der Laderampe 7 bzw. des Tores 8.

Aus der Figur 2a ist ersichtlich, dass der Sensor 3 an einem oberen Teil 9 des Tores 8 angeordnet ist. Der Sensor 3 ist in horizontaler Richtung mittig angeordnet, sodass mittels des Sensors 3 von schräg oben das Fahrzeug 1 und den Be- und/oder Entladepunkt 2 bzw. die Laderampe 7 erfasst. Es wird der Abstand d zwischen der äußeren Kontur des Fahrzeuges und dem Be- und/oder Entladepunkt 2 ermittelt. Der Sensor 3, der als Hilfsmittel zum Positionieren des Fahrzeuges 1 dient, ist, wie hier gezeigt, nicht Teil des Fahrzeuges 1, sondern ist im betriebsbereiten Zustand am Tor 8 bzw. an dem oberen Teil 9 des Tores 8 bzw. an der Decke montiert.

Die Figur 2b zeigt die dazugehörige Anzeigeeinheit 5, die von außen an dem Tor 8 angebracht ist. Das Fahrzeug 1 wird rückwärts an das Tor 8 gefahren. Der in der Figur 2b gezeigte Ausschnitt entspricht der Sicht des Fahrers beim Positionieren des Fahrzeuges 1 durch den Seitenspiegel. Der Abstand d zwischen dem Fahrzeug 1 und der Laderampe 7 bzw. dem Tor 8 kann aus diesem Blickwinkel nicht eingeschätzt werden. Die Anzeigeeinheit 5 zeigt dem Fahrer an, ob er weiter vor oder zurück fahren muss oder ob die Sollposition erreicht ist. Die Anzeigeeinheit 5 kann dabei wie eine Ampel aufgebaut sein. In Figur 2c sind die jeweiligen visualisierten Rückmeldungen gezeigt. Die Anzeigeeinheit 5 zeigt den vorwärts Pfeil 5a an, wenn sich das Fahrzeug 1 zu nah an dem Be- und/oder Entladepunkt 2 befindet und der Fahrer das Fahrzeug 1 erneut vorwärtsbewegen muss, um die Sollposition zu erreichen. Die Anzeigeeinheit 5 zeigt den rückwärts Pfeil 5b an, wenn sich das Fahrzeug 1 zu weit weg von dem Be- und/oder Entladepunkt 2 befindet und der Fahrer das Fahrzeug 1 weiter rückwärtsbewegen muss, um die Sollposition zu erreichen. Die Anzeigeeinheit 5 zeigt den roten Punkt als Stopp 5c an, wenn sich das Fahrzeug 1 an der Sollposition befindet.

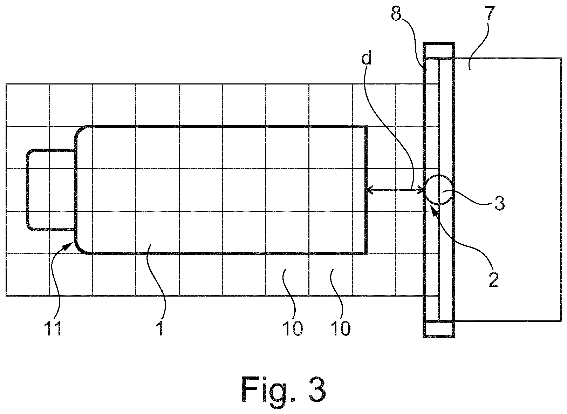

Die Figur 3 zeigt schematisch ein virtuelles Abbild eines Fahrzeuges 1 gemäß einem bevorzugten Ausführungsbeispiel der Erfindung in einer Draufsicht. Gezeigt ist das Fahrzeug 1, das rückwärts vor den Be- und/oder Entladepunkt 2 bzw. vor das Tor 8 gefahren wird. Der Sensor 3 erfasst die Fahrbahn 11 sowie das Fahrzeug 1 und bildet die Szene virtuell ab. Die Fahrbahn 11 wird in mehrere virtuelle Felder 10 eingeteilt. Die in Figur 3 gezeigte Feldgröße ist nicht maßstabsgetreu. Die Feldgröße weist eine maximale Größe bis zu 2 cm x 2 cm auf, sodass das Fahrzeug bis auf 2 cm genau an die Laderampe 7 bzw. das Tor 8 gesteuert werden kann. Die virtuellen Felder 10 dienen dazu, die Position des Fahrzeuges 1 auch aus einem verzerrten Blickwinkel von schräg oben relativ zum Be- und/oder Entladepunkt 2 bestimmen zu können. Dadurch, dass der Sensor 3 nicht auf derselben horizontalen Ebene wie der Be- und/oder Entladepunkt angeordnet ist, können auf diese Weise räumliche Verzerrungen beim Bestimmen des Abstandes d zwischen dem Fahrzeug 1 und dem Be. und/oder Entladepunkt 2 ausgeglichen werden.

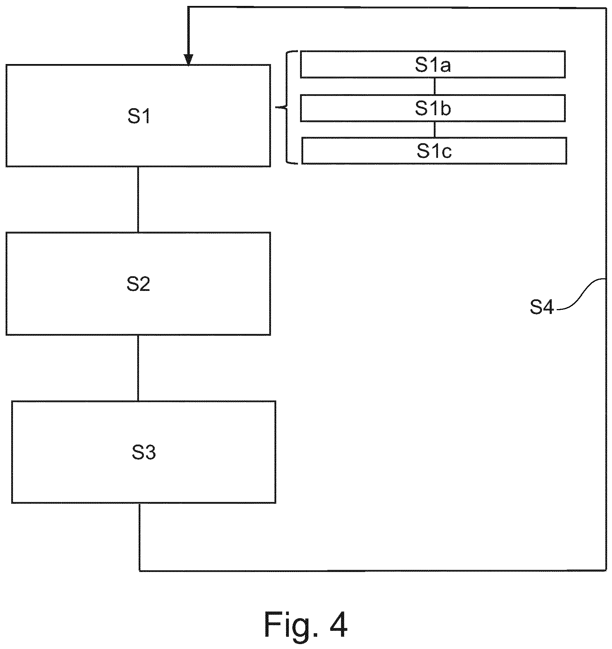

Die Figur 4 zeigt ein Flussdiagramm eines Verfahrens zum Positionieren eines Fahrzeuges gemäß einem bevorzugten Ausführungsbeispiel der Erfindung. In einem ersten Schritt S1 wird die Position des Fahrzeuges 1 mittels des wenigstens einen Sensors 3 erfasst. Dieser Schritt S1 umfasst die Unterschritte S1a bis S1c. Zum Erfassen der Position des Fahrzeuges 1 wird zuerst ein virtuelles Abbild der Fahrbahn 11 erstellt und in mehrere virtuelle Felder 10 eingeteilt. Danach wird die Kontur des Fahrzeuges 1 erkannt und anschließend in das Raster der mehreren Felder 10 einsortiert, sodass die Position des Fahrzeuges 1 anhand der erfassten Kontur und der virtuellen Felder 10 bestimmt wird. Nachdem die Position des Fahrzeuges 1 bestimmt wurde, wird in einem nächsten Schritt S2 der Abstand d zwischen dem Fahrzeug 1 und dem Be- und/oder Entladepunkt 2 abhängig von der Position des Fahrzeuges 1 ermittelt. Je nachdem wie groß der Abstand d bzw. die Abweichung von einem vordefinierten Sollwert ist, wird in einem anschließenden Schritt S3 die Position des Fahrzeuges 1 kategorisiert und eine Rückmeldung an den Fahrer ("Vor", "Stopp", "Zurück") mittels der Anzeigeeinheit 5 ausgegeben. Diese vorgenannten Schritte werden iterativ wiederholt bis der Abstand d dem Sollwert entspricht, das Fahrzeug 1 geparkt ist und der Positionierungsvorgang abgeschlossen ist.

### Bezugszeichenliste

- 1: Fahrzeug
- 2: Be- und/oder Entladepunkt
- 3: Sensor
- 4: Auswerteeinheit
- 5: Anzeigeeinheit
- 6: Schnittstelle
- 7: Laderampe
- 8: Tor
- 9: oberer Teil
- 10: virtuelles Feld
- 11: Fahrbahn
- 12: Erfassungsbereich
- d: Abstand
- h: Höhe

## Patentansprüche

1. Verfahren zum Positionieren eines Fahrzeuges (1) an einem Be- und/oder Entladepunkt (2) mittels einer Vorrichtung aufweisend
wenigstens einen Sensor (3) zum Erfassen einer Position des Fahrzeuges (1),
eine Auswerteeinheit (4) zum Bestimmen eines Abstandes (d) zwischen dem Fahrzeug (1) und dem Be- und/oder Entladepunkt (2) abhängig von der erfassten Position des Fahrzeuges (1), und
eine Anzeigeeinheit (5) zum Visualisieren einer Rückmeldung an einen Fahrer des Fahrzeuges (1) abhängig von dem Abstand (d) zwischen dem Fahrzeug (1) und dem Be- und/oder Entladepunkt (2), wobei der wenigstens eine Sensor (3) und die Anzeigeeinheit (5) zur Montage an dem Be- und/oder Entladepunkt (2) ausgestaltet sind, mit folgenden Verfahrensschritten:
S1) Erfassen einer Position des Fahrzeuges (1) mittels des wenigstens einen Sensors (3),
S1a) Einteilen eines virtuellen Abbildes der Fahrbahn (11) vor dem Be- und/oder Entladepunkt (2) in eine Mehrzahl virtueller Felder (10),
S1b) Erkennen einer Kontur des Fahrzeuges (1),
S1c) Bestimmen der Position des Fahrzeuges (1) anhand der Kontur und der virtuellen Felder (10),
S2) Bestimmen eines Abstandes (d) zwischen dem Fahrzeug (1) und dem Be- und/oder Entladepunkt (2) abhängig von der Position des Fahrzeuges (1),
S3) Kategorisieren der Position des Fahrzeuges (1) und Ausgeben einer Rückmeldung an den Fahrer mittels der Anzeigeeinheit (5), und
S4) Iteratives Wiederholen der Schritte S1) bis S3) bis der Positionierungsvorgang abgeschlossen ist.

2. Verfahren nach dem vorhergehenden Anspruch, wobei das Kategorisieren der Position des Fahrzeuges (1) in wenigstens drei Kategorien erfolgt, die Kategorien umfassend "Vor", "Stopp" und "Zurück".

3. Verfahren nach einem der vorhergehenden Ansprüche, wobei die virtuellen Felder jeweils eine Feldgröße von höchstens 10cm x 10cm, bevorzugt höchstens 5cm x 5cm, besonders bevorzugt höchstens 2cm x 2cm aufweisen.

4. Verfahren nach einem der vorhergehenden Ansprüche, wobei der wenigstens eine Sensor (3) einen Lidar-Sensor umfasst.

5. Verfahren nach einem der vorhergehenden Ansprüche, wobei die Vorrichtung eine Schnittstelle (6) aufweist, die zur Kommunikation mit externen Systemen eingerichtet ist.

6. Verfahren nach einem der vorhergehenden Ansprüche, wobei der Be- und/oder Entladepunkt (2) eine Laderampe (7) und ein an die Laderampe (7) angrenzendes Tor (8) aufweist, und der wenigstens eine Sensor (3) im betriebsbereiten Zustand an einem oberen Teil (9) des Tores (8) angeordnet ist.

7. Verfahren nach einem der vorhergehenden Ansprüche, wobei der wenigstens eine Sensor (3) auf einer Höhe (h) von wenigstens 3,5 m, bevorzugt wenigstens 3,8 m, besonders bevorzugt wenigstens 4 m angeordnet ist.

8. Verwendung eines Verfahrens nach einem der vorhergehenden Ansprüche zum Positionieren eines Lastkraftwagens an einer Laderampe (7).
